(19) Europäisches Patentamt
European Patent Office
Office européen des brevets

(11) **EP 3 982 156 A1**

(12) **EUROPEAN PATENT APPLICATION**

(43) Date of publication:
**13.04.2022  Bulletin 2022/15**

(21) Application number: **21199980.0**

(22) Date of filing: **29.09.2021**

(51) International Patent Classification (IPC):
**G01S 7/481** (2006.01)   **G01S 17/931** (2020.01)
**G02B 26/10** (2006.01)   **G02B 26/12** (2006.01)
**G01S 7/48** (2006.01)

(52) Cooperative Patent Classification (CPC):
**G01S 7/4817; G01S 17/931; G02B 26/101;**
**G02B 26/105; G02B 26/124;** G01S 7/4802

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **09.10.2020  RU 2020133320**
**21.09.2021  US 202117481273**

(71) Applicant: **YANDEX SELF DRIVING GROUP LLC**
**Moscow, Skolkovo 121205 (RU)**

(72) Inventors:
• **GOLIKOV, Andrey Victorovich**
**124536 Moscow, Zelenograd (RU)**
• **ORLOV, Nikolay Evgenevich**
**427967 Sarapul, Udmurtskaya Resp (RU)**
• **SOLOMENTSEV, Dmitry Valentinovich**
**127549 Moscow (RU)**
• **KUZNETSOV, Vladimir Albertovich**
**121614 Moscow (RU)**

(74) Representative: **BCF Global**
**Centre d'Entreprise et d'Innovation**
**56, Bd Niels Bohr**
**CS 52132**
**69603 Villeurbanne Cedex (FR)**

(54) **LIDAR SYSTEMS AND METHODS WITH SELECTIVE SCANNING**

(57)    An optical system (300) and a method (800) of operation thereof are provided. The method (800) comprises: causing, by the controller (310), a light source (302) to emit light, the light being scanned over a first direction by a first optical element (502) of the optical system (300), the first optical element (502) rotating about a first axis perpendicular to the first direction defining in part a field of view of the optical system (300); sensing, by at least one sensor communicatively coupled with the controller (310), a reflected signal of light reflected off surrounding objects in the field of view of the optical system (300); selecting, by the controller (310), a region of interest of the field of view based at least in part on the reflected signal; and causing, by the controller (310), a second optical element (504) to selectively pivot about a second axis parallel to the first axis, thereby modifying a frequency of scanning in the region of interest.

Figure 3

EP 3 982 156 A1

**Description**

**TECHNICAL FIELD**

The present technology relates generally to Light Detection and Ranging (LiDAR) systems; and in particular, to methods and systems for selectively scanning objects in regions of interest thereof.

**BACKGROUND**

Several computer-based navigation systems that are configured for aiding navigation and/or control of vehicles have been proposed and implemented in the prior art. These systems range from more basic map-aided localization-based solutions — i.e. use of a computer system to assist a driver in navigating a route from a starting point to a destination point; to more complex ones such as computer-assisted and/or driver-autonomous driving systems.

Some of these systems are implemented as what is commonly known as a "cruise control" system. Within these systems, the computer system boarded on the vehicles maintains a user-set speed of the vehicle. Some of the cruise control systems implement an "intelligent distance control" system, whereby the user can set up a distance to a potential car in front (such as, select a value expressed in a number of vehicles) and the computer system adjusts the speed of the vehicle at least in part based on the vehicle approaching the potential vehicle in front within the pre-defined distance. Some of the cruise control systems are further equipped with collision control systems, which systems, upon detection of the vehicle (or other obstacle) in front of the moving vehicle, slow down or stop the vehicle.

Some of the more advanced systems provide for a fully autonomous driving of the vehicle without direct control from the operator (i.e. the driver). These autonomously driven vehicles include systems that can cause the vehicle to accelerate, brake, stop, change lane and self-park.

One of the main technical challenges in implementing the above systems is the ability to detect an object located around the vehicle. In one example, the systems may need the ability to detect the vehicle in front of the present vehicle (the present vehicle having the system onboard), which vehicle in front may pose a risk / danger to the present vehicle and may require the system to take a corrective measure, be it braking or otherwise changing speed, stopping or changing lanes.

In LiDAR-based systems (also, referred to herein as a "LiDAR system", for short), objects around the vehicle can be detected by transmitting beams of light towards the surroundings of the vehicle and detecting reflected light beams. Lasers emitting pulses of light within a narrow wavelength are often used as the light source. The position and distance of the object can thus be computed using Time of Flight calculations of the emitted and detected light beams. By computing such positions as "data points", a digital multi-dimensional representation (such as a 3D point map, for example) of the surroundings can be generated. Further, dynamic computations of data points indicative of objects in the surroundings of the vehicle may be used for generating a current trajectory for the vehicle at each given moment in time.

As it may become apparent, resolution of scanning the surroundings of the vehicle can be defined by a field of view of the LiDAR system — that is, by capabilities of the LiDAR system to cover the surroundings of the vehicle by the emitted light, in both horizontal and vertical directions. Further, in some implementations, the LiDAR system may be configured, at a given fixed position thereof, to scan a respective predetermined portion of the field of view — a so called region of interest. Accordingly, by generating data points, at a predetermined frequency, in each of regions of interest within the field of view, the LiDAR system can be configured to generate the 3D point map of the surroundings of the vehicle and/or the current trajectory therefor.

However, scanning all regions of interest within the field of view of the LiDAR system equally, at a same frequency, may not allow for generation of reliable digital representations of objects located therein. Thus, the resulting 3D point map and/or the current trajectory for the vehicle generated based thereon may be provided at a limited level of accuracy, which eventually may affect safety of the operation of the vehicle.

Certain prior art approaches have been proposed to tackle the above-identified technical problem of improving the quality of the digital representations of the objects generated by LiDAR-based systems.

United States Patent Application Publication No.: 2018/284,276-A1 published on October 04, 2018, assigned to Luminar Technologies Inc, and entitled *"Dynamically Scanning a Field of Regard Using a Limited Number of Output Beams"* discloses a LiDAR system including a light source configured to emit a beam of light including a sequence of pulses, a scanner configured to scan, using the sequence of pulses, a field of regard of the LiDAR system along a horizontal dimension and a vertical dimension in accordance with a first scan pattern; a receiver configured to detect light from at least some of the pulses scattered by one or more remote targets to generate an array of pixels, based on the sequence of pulses of the beam of light. The LiDAR system is further configured to modify the first scan pattern in view of a result of processing the generated array of pixels to generate a second scan pattern, and scan the field of regard using the sequence of pulses along the horizontal dimension and the vertical dimension in accordance with the second scan pattern.

United States Patent Application Publication No.: 2020/025,881-A1 published on January 23, 2020, assigned to Innovusion Ireland Ltd, and entitled *"Lidar Detection Systems and Methods that Use Multi-Plane Mirrors"* discloses a light detection and ranging (LiDAR) system for use with a vehicle, comprising: a housing configured to be mounted to a windshield of the vehicle, the housing comprising: a transceiver module operative to transmit and receive light energy; a polygon structure that defines a lateral angle of the field of view of the LiDAR system; and a moveable mirror positioned to redirect light energy passing between the transceiver module and the polygon structure, the moveable mirror operative to control an exit angle of light being redirected by the polygon structure, wherein the exit angle corresponds to a particular angle within a vertical field of view of the LiDAR system.

Chinese Patent Application Publication No.: 109,471,126-A published on March 15, 2019, and entitled *"A Kind of Vibration for Linear Array Laser Radar Turns to Combine Circumferential Scanning Device"* discloses circumferential scanning device, including Laser emission and receiver, two shaft mechanical galvanometers, 45° of tilting mirrors, 45° of tilting mirror driving circuits, two axis galvanometer driving circuits, sequential control circuit, distance signal processing circuit, angle-range data acquisition module, interface communication circuit and 360° of perspective structure parts the invention discloses a kind of vibration for linear array laser radar. The present invention realizes local two-dimensional scanning by two axis galvanometers, 360° of circumferential scanning of linear array laser ranging are realized by 45° of reflecting mirrors being pivoted again, in conjunction with the angle feedback data of the synchronous two axis galvanometers and 45° of tilting mirrors extracted, obtain the point cloud data of 360° of circumferential scanning of laser radar, breach the circumferential visual field limitation of single two axis vibration mirror scanning.

## SUMMARY

Therefore, there is a need for systems and methods which avoid, reduce or overcome the limitations of the prior art.

Developers of the present technology have appreciated that the quality and reliability of the resulting 3D point map and/or the current trajectory for the vehicle may be improved if regions of interest of the LiDAR system are scanned at different frequencies, based on, for example, the types of objects located therein. For example, certain objects, which *per se* are not associated with elevated risk of accident, such as buildings, trees, street lamps, and the like — may be scanned at a regular frequency determined based on a predetermined level of accuracy of digital representations of such objects. In some implementations, it may instead be of interest to scan static objects in greater detail or more frequently, for instance for traffic lights. In such a case, these objects may be included in the regions of interest to be scanned at greater frequency.

In another example, objects that may be associated with higher accident risks to the vehicle and/or to other road users (pedestrians, animals, other vehicle, pedestrian crossings, road signs, parked vehicles, and the like) — may be scanned with an increased frequency to generate more data points indicative thereof, whereby the LiDAR is capable of generating more accurate digital representations thereof at each given moment in time.

Such an approach may thus aid in preventing accidents associated with the vehicle more effectively, as well as more efficiently utilizing computational resources of the LiDAR system.

Accordingly, for implementing such an approach to scanning the surroundings of the vehicle, the developers have devised an optical system, horizontal and vertical components of a field of view of which are defined by a first optical elements and a second optical element, respectively. More specifically, the optical system includes a light source configured to emit light. Further, using the first optical element caused to rotate at a constant rotation speed about a first rotation axis, the optical system is configured to scan an emitted beam of light over a given ROI horizontally at a given frequency of scanning; and using the second optical element configured to rotate about a second rotation axis perpendicular to the first rotation axis, the optical system is configured to modulate incidence of the emitted beam of light upon the first optical element along the first rotation axis, thereby scanning it over the given ROI vertically.

Additionally, the second optical element can be configured to rotate about a third rotation axis parallel to the first rotation axis, which allows modifying the given frequency of scanning of the emitted beam of light over the given ROI. This may further allow selectively modifying the frequency of scanning of the given ROI based on objects detected therein using only the second optical element, without altering the constant speed of rotation of the first optical element. Specifically, if a given object in the given ROI has been identified as being associated with higher safety risk, the second optical element is caused to rotate about the third rotation axis, thereby increasing the frequency of scanning of the given ROI. On the other hand, if the given object has been identified as not being associated with higher safety risk, the second optical element is caused either to stop rotating about the third rotation axis, or (if it has not been rotating at the moment of object identification) remains at rest, thereby decreasing, or at least not modifying, the frequency of scanning of the given ROI.

More specifically, in accordance with a first broad aspect of the present technology, there is provided an optical system. The optical system comprises: a light source; a scanner unit configured to direct light from the light source outwardly from the optical system; a receiving unit configured to sense light reflected from surrounding objects into the optical system, the receiving unit including at least one sensor; and a controller communicatively coupled with the at least one sensor, the scanner unit and the receiving unit. The scanner unit comprises: a first optical element configured to rotate about a first axis, thereby defining in part a field of view of the optical system, and a second optical element communicatively coupled with the controller, the light source, the first optical element, the second optical element being arranged to receive light from the first optical element, the second optical element configured to selectively pivot about a second axis parallel to the first axis, the controller controlling movement of the second optical element responsive to information received from the at least one sensor.

In some implementations of the optical system, the second optical element further is configured to rotate about a third axis perpendicular to the second axis.

In some implementations of the optical system, the second optical element is configured to rotate about the second axis and the third axis simultaneously.

In some implementations of the optical system, the second optical element is a mirror.

In some implementations of the optical system, the second optical element is a Risley prism.

In some implementations of the optical system, the first optical element is configured to rotate about the first axis at a constant speed.

In some implementations of the optical system, the first optical element is a prism.

In some implementations of the optical system, the prism includes a plurality of faces and a spinning core element, the spinning core element being elongated along the first axis, and each one of the plurality of faces being a reflective surface arranged around the spinning core element.

In some implementations of the optical system, each one of the plurality of faces is arranged at a respective predetermined angle relative to the first axis.

In some implementations of the optical system, each one of the plurality of faces is parallel to the first axis.

In some implementations of the optical system, the controller is configured to control the movement of the second optical element, based on the information received from the at least one sensor, to modify a frequency of scanning over at least one of a plurality of predetermined regions of interest within the field of view of the optical system.

In some implementations of the optical system, the controller is further configured to control the movements of the second optical element via at least one galvanometer communicatively coupled therewith.

In some implementations of the optical system, the light source, the second optical element, and the first optical element are positioned sequentially along an optical axis.

In accordance with a second broad aspect of the present technology, there is provided a method for controlling an optical system. The method is executable by a controller of the optical system. The method comprises: causing, by the controller, a light source to emit light, the light being scanned over a first direction by a first optical element of the optical system, the first optical element rotating about a first axis perpendicular to the first direction defining in part a field of view of the optical system; sensing, by at least one sensor communicatively coupled with the controller, a reflected signal of light reflected off surrounding objects in the field of view of the optical system; selecting, by the controller, a region of interest of the field of view based at least in part on the reflected signal; and causing, by the controller, a second optical element to selectively pivot about a second axis parallel to the first axis, thereby modifying a frequency of scanning in the region of interest.

In some implementations of the method, in response to detecting, by the controller based on the reflected signal, at least one first class object in the region of interest, the modifying further comprises increasing the frequency of scanning in the region of interest.

In some implementations of the method, in response to detecting, by the controller based on the reflected signal, at least one second class object in the region of interest without detecting any first class object, the modifying further comprises decreasing the frequency of scanning in the region of interest.

In some implementations of the method, a first class object is a dynamic object, and a second class object is a static object.

In some implementations of the method, the controller is further configured to determine the region of interest based on a predetermined instruction for selecting regions of interest to be scanned.

In some implementations of the method, the method further comprises, causing by the controller, the second optical element to pivot about a third axis perpendicular to the second axis.

In some implementations of the method, the method further comprises, causing by the controller, the second optical element to pivot about the second axis and the third axis simultaneously.

In the context of the present specification, the term "light source" broadly refers to any device configured to emit radiation such as a radiation signal in the form of a beam, for example, without limitation, a light beam including radiation of one or more respective wavelengths within the electromagnetic spectrum. In one example, the light source can be a "laser source". Thus, the light source could include a laser such as a solid-state laser, laser diode, a high-power laser, or an alternative light source such as, a light emitting diode (LED)-based light source. Some (non-limiting) examples of the laser source include: a Fabry-Perot laser diode, a quantum well laser, a distributed Bragg reflector (DBR) laser, a distributed feedback (DFB) laser, a fiber-laser, or a vertical-cavity surface-emitting laser (VCSEL). In addition, the laser source may emit light beams in differing formats, such as light pulses, continuous wave (CW), quasi-CW, and so on. In some non-limiting examples, the laser source may include a laser diode configured to emit light at a wavelength between about 650 nm and 1150 nm. Alternatively, the light source may include a laser diode configured to emit light beams at a wavelength between about 800 nm and about 1000 nm, between about 850 nm and about 950 nm, between about 1300 nm and about 1600 nm, or in between any other suitable range. Unless indicated otherwise, the term "about" with regard to a numeric value is defined as a variance of up to 10% with respect to the stated value.

In the context of the present specification, an "output beam" may also be referred to as a radiation beam, such as a light beam, that is generated by the radiation source and is directed downrange towards a region of interest. The output beam may have one or more parameters such as: beam duration, beam angular dispersion, wavelength, instantaneous power, photon density at different distances from light source, average power, beam power intensity, beam width, beam repetition rate, beam sequence, pulse duty cycle, wavelength, or phase etc. The output beam may be unpolarized or randomly polarized, may have no specific or fixed polarization (e.g., the polarization may vary with time), or may have a particular polarization (e.g., linear polarization, elliptical polarization, or circular polarization).

In the context of the present specification, an "input beam" is radiation or light entering the system, generally after having been reflected from one or more objects in the ROI. The "input beam" may also be referred to as a radiation beam or light beam. By reflected is meant that at least a portion of the output beam incident on one or more objects in the ROI, bounces off the one or more objects. The input beam may have one or more parameters such as: time-of-flight (i.e., time from emission until detection), instantaneous power (e.g., power signature), average power across entire return pulse, and photon distribution/signal over return pulse period etc. Depending on the particular usage, some radiation or light collected in the input beam could be from sources other than a reflected output beam. For instance, at least some portion of the input beam could include light-noise from the surrounding environment (including scattered sunlight) or other light sources exterior to the present system.

In the context of the present specification, the term "surroundings" of a given vehicle refers to an area or a volume around the given vehicle including a portion of a current environment thereof accessible for scanning using one or more sensors mounted on the given vehicle, for example, for generating a 3D map of the such surroundings or detecting objects therein.

In the context of the present specification, a "Region of Interest" may broadly include a portion of the observable environment of a LiDAR system in which the one or more objects may be detected. It is noted that the region of interest of the LiDAR system may be affected by various conditions such as but not limited to: an orientation of the LiDAR system (e.g. direction of an optical axis of the LiDAR system); a position of the LiDAR system with respect to the environment (e.g. distance above ground and adjacent topography and obstacles); operational parameters of the LiDAR system (e.g. emission power, computational settings, defined angles of operation), etc. The ROI of LIDAR system may be defined, for example, by a plane angle or a solid angle. In one example, the ROI may also be defined within a certain distance range (e.g. up to 200 m or so).

In the context of the present specification, a "server" is a computer program that is running on appropriate hardware and is capable of receiving requests (e.g. from electronic devices) over a network, and carrying out those requests, or causing those requests to be carried out. The hardware may be implemented as one physical computer or one physical computer system, but neither is required to be the case with respect to the present technology. In the present context, the use of the expression a "server" is not intended to mean that every task (e.g. received instructions or requests) or any particular task will have been received, carried out, or caused to be carried out, by the same server (i.e. the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "electronic device" is any computer hardware that is capable of running software appropriate to the relevant task at hand. In the context of the present specification, the term "electronic device" implies that a device can function as a server for other electronic devices, however it is not required to be the case with respect to the present technology. Thus, some (non-limiting) examples of electronic devices include self-driving unit, personal computers (desktops, laptops, netbooks, etc.), smart phones, and tablets, as well as network equipment such as routers, switches, and gateways. It should be understood that in the present context the fact that the device functions as an electronic device does not mean that it cannot function as a server for other electronic devices.

In the context of the present specification, the expression "information" includes information of any nature or kind whatsoever capable of being stored in a database. Thus information includes, but is not limited to visual works (e.g. maps), audiovisual works (e.g. images, movies, sound records, presentations etc.), data (e.g. location data, weather data, traffic data, numerical data, etc.), text (e.g. opinions, comments, questions, messages, etc.), documents, spreadsheets, etc.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the words "first", "second", "third", etc. have been used as adjectives only for the purpose of allowing for distinction between the nouns that they modify from one another, and not for the purpose of describing any particular relationship between those nouns. Further, as is discussed herein in other contexts, reference to a "first" element and a "second" element does not preclude the two elements from being the same actual real-world element.

Implementations of the present technology each have at least one of the above-mentioned object and/or aspects, but do not necessarily have all of them. It should be understood that some aspects of the present technology that have resulted from attempting to attain the above- mentioned object may not satisfy this object and/or may satisfy other objects not specifically recited herein.

Additional and/or alternative features, aspects and advantages of implementations of the present technology will become apparent from the following description, the accompanying drawings and the appended claims.

## BRIEF DESCRIPTION OF THE DRAWINGS

These and other features, aspects and advantages of the present technology will become better understood with regard to the following description, appended claims and accompanying drawings where:

Figure 1 depicts a schematic diagram of an example computer system configurable for implementing certain non-limiting embodiments of the present technology;

Figure 2 depicts a schematic diagram of a networked computing environment being suitable for use with certain non-limiting embodiments of the present technology;

Figure 3 depicts a schematic diagram of an example LiDAR system implemented in accordance with certain non-limiting embodiments of the present technology;

Figure 4 depicts a schematic diagram a field of view of the LiDAR system of Figure 3 defined based on a predetermined scanning pattern, in accordance with certain non-limiting embodiments of the present technology;

Figure 5 depicts specific components of the LiDAR system of Figure 3 used in certain implementations thereof, in accordance with certain non-limiting embodiments of the present technology;

Figure 6 depicts a schematic diagram of an example configuration of one of the specific components of the LiDAR system depicted in Figure 5, in accordance with certain non-limiting embodiments of the present technology;

Figure 7 depicts a schematic diagram of operation of the LiDAR system of Figure 3 including the specific components of Figure 5 for scanning one or more regions of interest, in accordance with certain non-limiting embodiments of the present technology;

Figure 8 depicts a flowchart diagram of a method for operating the LiDAR system of Figure 3 including the specific components of Figure 5 for scanning one or more regions of interest, in accordance with certain non-limiting embodiments of the present technology.

## DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, we will now consider some non-limiting examples to illustrate various implementations of aspects of the present technology.

**Computer System**

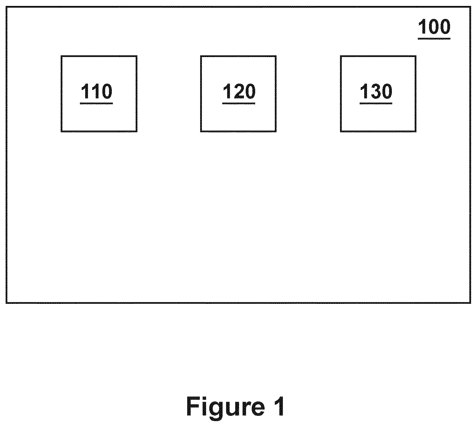

Referring initially to Figure 1, there is depicted a schematic diagram of a computer system 100 suitable for use with some implementations of the present technology. The computer system 100 includes various hardware components including one or more single or multi-core processors collectively represented by a processor 110, a solid-state drive 120, and a memory 130, which may be a random-access memory or any other type of memory.

Communication between the various components of the computer system 100 may be enabled by one or more internal and/or external buses (not shown) (e.g. a PCI bus, universal serial bus, IEEE 1394 "Firewire" bus, SCSI bus, Serial-ATA bus, etc.), to which the various hardware components are electronically coupled. According to embodiments of the present technology, the solid-state drive 120 stores program instructions suitable for being loaded into the memory 130 and executed by the processor 110 for determining a presence of an object. For example, the program instructions may be part of a vehicle control application executable by the processor 110. It is noted that the computer system 100 may have additional and/or optional components (not depicted), such as network communication modules, localization modules, and the like.

**Networked Computing Environment**

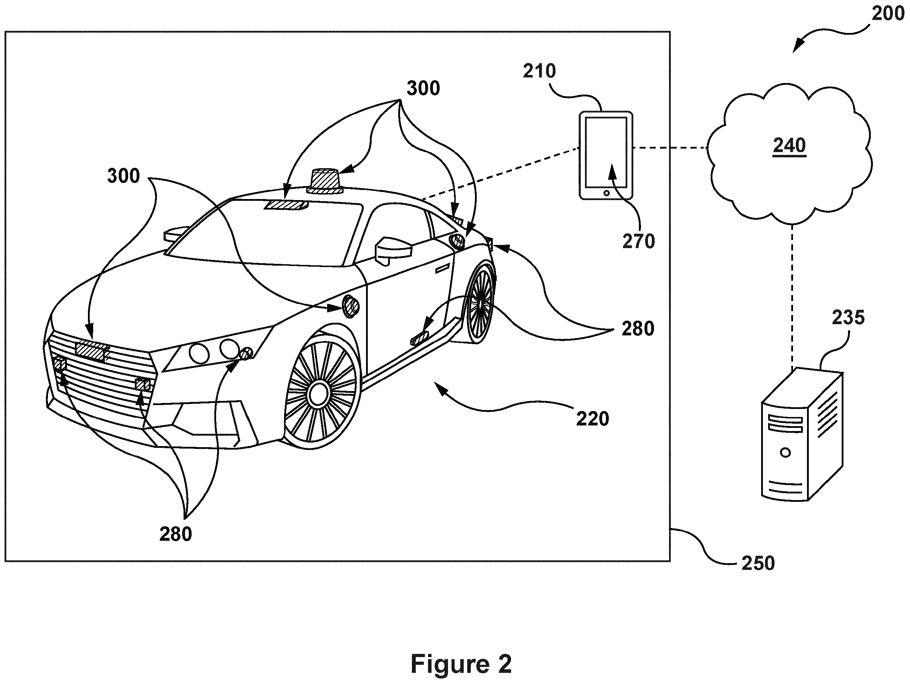

With reference to Figure 2, there is depicted a networked computing environment 200 suitable for use with some non-limiting embodiments of the present technology. The networked computing environment 200 includes an electronic device 210 associated with a vehicle 220 and/or associated with a user (not depicted) who is associated with the vehicle 220 (such as an operator of the vehicle 220). The networked computing environment 200 also includes a server 235 in communication with the electronic device 210 via a communication network 240 (e.g. the Internet or the like, as will be described in greater detail herein below).

In some non-limiting embodiments of the present technology, the networked computing environment 200 could include a GPS satellite (not depicted) transmitting and/or receiving a GPS signal to/from the electronic device 210. It will be understood that the present technology is not limited to GPS and may employ a positioning technology other than GPS. It should be noted that the GPS satellite can be omitted altogether.

The vehicle 220, to which the electronic device 210 is associated, could be any transportation vehicle, for leisure or otherwise, such as a private or commercial car, truck, motorbike or the like. Although the vehicle 220 is depicted as being a land vehicle, this may not be the case in each and every non-limiting embodiment of the present technology. For example, in certain non-limiting embodiments of the present technology, the vehicle 220 may be a watercraft, such as a boat, or an aircraft, such as a flying drone.

The vehicle 220 may be user operated or a driver-less vehicle. In some non-limiting embodiments of the present technology, it is contemplated that the vehicle 220 could be implemented as a Self-Driving Car (SDC). It should be noted that specific parameters of the vehicle 220 are not limiting, these specific parameters including for example: vehicle manufacturer, vehicle model, vehicle year of manufacture, vehicle weight, vehicle dimensions, vehicle weight distribution, vehicle surface area, vehicle height, drive train type (e.g. 2x or 4x), tire type, brake system, fuel system, mileage, vehicle identification number, and engine size.

According to the present technology, the implementation of the electronic device 210 is not particularly limited. For example, the electronic device 210 could be implemented as a vehicle engine control unit, a vehicle CPU, a vehicle navigation device (e.g. TomTom™, Garmin™), a tablet, a personal computer built into the vehicle 220, and the like. Thus, it should be noted that the electronic device 210 may or may not be permanently associated with the vehicle 220. Additionally or alternatively, the electronic device 210 could be implemented in a wireless communication device such as a mobile telephone (e.g. a smart-phone or a radio-phone). In certain embodiments, the electronic device 210 has a display 270.

The electronic device 210 could include some or all of the components of the computer system 100 depicted in Figure 1, depending on the particular embodiment. In certain embodiments, the electronic device 210 is an on-board computer device and includes the processor 110, the solid-state drive 120 and the memory 130. In other words, the electronic device 210 includes hardware and/or software and/or firmware, or a combination thereof, for processing data as will be described in greater detail below.

In some non-limiting embodiments of the present technology, the communication network 240 is the Internet. In alternative non-limiting embodiments of the present technology, the communication network 240 can be implemented as any suitable local area network (LAN), wide area network (WAN), a private communication network or the like. It should be expressly understood that implementations for the communication network 240 are for illustration purposes only. A communication link (not separately numbered) is provided between the electronic device 210 and the communication network 240, the implementation of which will depend, *inter alia,* on how the electronic device 210 is implemented. Merely as an example and not as a limitation, in those non-limiting embodiments of the present technology where the electronic device 210 is implemented as a wireless communication device such as a smartphone or a navigation device, the communication link can be implemented as a wireless communication link. Examples of wireless communication links may include, but are not limited to, a 3G communication network link, a 4G communication network link, and the like. The communication network 240 may also use a wireless connection with the server 235.

In some embodiments of the present technology, the server 235 is implemented as a computer server and could include some or all of the components of the computer system 100 of Figure 1. In one non-limiting example, the server 235 is implemented as a Dell™ PowerEdge™ Server running the Microsoft™ Windows Server™ operating system, but can also be implemented in any other suitable hardware, software, and/or firmware, or a combination thereof. In the depicted non-limiting embodiments of the present technology, the server 235 is a single server. In alternative non-limiting embodiments of the present technology, the functionality of the server 235 may be distributed and may be implemented via multiple servers (not shown).

In some non-limiting embodiments of the present technology, the processor 110 of the electronic device 210 could be in communication with the server 235 to receive one or more updates. Such updates could include, but are not limited to, software updates, map updates, routes updates, weather updates, and the like. In some non-limiting embodiments of the present technology, the processor 110 can also be configured to transmit to the server 235 certain operational data, such as routes travelled, traffic data, performance data, and the like. Some or all such data transmitted between the vehicle 220 and the server 235 may be encrypted and/or anonymized.

It should be noted that a variety of sensors and systems may be used by the electronic device 210 for gathering information about surroundings 250 of the vehicle 220. As seen in Figure 2, the vehicle 220 may be equipped with a plurality of sensor systems 280. It should be noted that different sensor systems from the plurality of sensor systems 280 may be used for gathering different types of data regarding the surroundings 250 of the vehicle 220.

In one example, the plurality of sensor systems 280 may include various optical systems including, *inter alia,* one or more camera-type sensor systems that are mounted to the vehicle 220 and communicatively coupled to the processor 110 of the electronic device 210. Broadly speaking, the one or more camera-type sensor systems may be configured to gather image data about various portions of the surroundings 250 of the vehicle 220. In some cases, the image data provided by the one or more camera-type sensor systems could be used by the electronic device 210 for performing object detection procedures. For example, the electronic device 210 could be configured to feed the image data provided by the one or more camera-type sensor systems to an Object Detection Neural Network (ODNN) that has been trained to localize and classify potential objects in the surroundings 250 of the vehicle 220.

In another example, the plurality of sensor systems 280 could include one or more radar-type sensor systems that are mounted to the vehicle 220 and communicatively coupled to the processor 110. Broadly speaking, the one or more radar-type sensor systems may be configured to make use of radio waves to gather data about various portions of the surroundings 250 of the vehicle 220. For example, the one or more radar-type sensor systems may be configured to gather radar data about potential objects in the surroundings 250 of the vehicle 220, such data potentially being representative of a distance of objects from the radar-type sensor system, orientation of objects, velocity and/or speed of objects, and the like.

It should be noted that the plurality of sensor systems 280 could include additional types of sensor systems to those non-exhaustively described above and without departing from the scope of the present technology.

**LiDAR System**

According to the present technology and as is illustrated in Figure 2, the vehicle 220 is equipped with at least one Light Detection and Ranging (LiDAR) system, such as a LiDAR system 300, for gathering information about surroundings 250 of the vehicle 220. While only described herein in the context of being attached to the vehicle 220, it is also contemplated that the LiDAR system 300 could be a stand alone operation or connected to another system.

Depending on the embodiment, the vehicle 220 could include more or fewer LiDAR systems 300 than illustrated. Depending on the particular embodiment, choice of inclusion of particular ones of the plurality of sensor systems 280 could depend on the particular embodiment of the LiDAR system 300. The LiDAR system 300 could be mounted, or retrofitted, to the vehicle 220 in a variety of locations and/or in a variety of configurations.

For example, depending on the implementation of the vehicle 220 and the LiDAR system 300, the LiDAR system 300 could be mounted on an interior, upper portion of a windshield of the vehicle 220. Nevertheless, as illustrated in Figure 2, other locations for mounting the LiDAR system 300 are within the scope of the present disclosure, including on a back window, side windows, front hood, rooftop, front grill, front bumper or the side of the vehicle 220. In some cases, the LiDAR system 300 can even be mounted in a dedicated enclosure mounted on the top of the vehicle 220.

In some non-limiting embodiments, such as that of Figure 2, a given one of the plurality of LiDAR systems 300 is mounted to the rooftop of the vehicle 220 in a rotatable configuration. For example, the LiDAR system 300 mounted to the vehicle 220 in a rotatable configuration could include at least some components that are rotatable 360 degrees about an axis of rotation of the given LiDAR system 300. When mounted in rotatable configurations, the given LiDAR system 300 could gather data about most of the portions of the surroundings 250 of the vehicle 220.

In some non-limiting embodiments of the present technology, such as that of Figure 2, the LiDAR systems 300 is mounted to the side, or the front grill, for example, in a non-rotatable configuration. For example, the LiDAR system 300 mounted to the vehicle 220 in a non-rotatable configuration could include at least some components that are not rotatable 360 degrees and are configured to gather data about pre-determined portions of the surroundings 250 of the vehicle 220.

Irrespective of the specific location and/or the specific configuration of the LiDAR system 300, it is configured to capture data about the surroundings 250 of the vehicle 220 used, for example, for building a multi-dimensional map of objects in the surroundings 250 of the vehicle 220. Details relating to the configuration of the LiDAR systems 300 to capture the data about the surroundings 250 of the vehicle 220 will now be described.

It should be noted that although in the description provided herein the LiDAR system 300 is implemented as a Time of Flight LiDAR system — and as such, includes respective components suitable for such implementation thereof — other implementations of the LiDAR system 300 are also possible without departing from the scope of the present technology. For example, in certain non-limiting embodiments of the present technology, the LiDAR system 300 may also be implemented as a Frequency-Modulated Continuous Wave (FMCW) LiDAR system according to one or more implementation variants and based on respective components thereof as disclosed in a co-owned Patent Application RU2020117983 filed 1/6/2020 and entitled *"LiDAR DETECTION METHODS AND SYSTEMS";* the content of which is hereby incorporated by reference in its entirety.

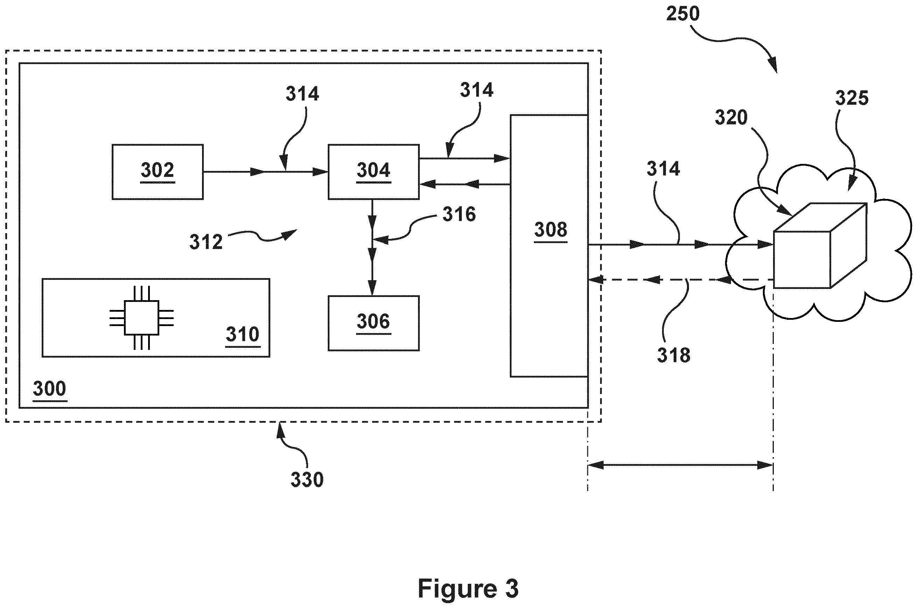

With reference to Figure 3, there is depicted a schematic diagram of one particular embodiment of the LiDAR system 300 implemented in accordance with certain non-limiting embodiments of the present technology.

Broadly speaking, the LiDAR system 300 includes a variety of internal components including, but not limited to: (i) a light source 302 (also referred to as a "light source" or a "radiation source component"), (ii) a beam splitting element 304, (iii) a scanner unit 308 (also referred to as a "scanner assembly"), (iv) a receiving unit 306 (also referred to herein as a "detection system", "receiving assembly", or a "detector"), and (v) a controller 310. It is contemplated that in addition to the components non-exhaustively listed above, the LiDAR system 300 could include a variety of sensors (such as, for example, a temperature sensor, a moisture sensor, etc.) which are omitted from Figure 3 for sake of clarity.

In certain non-limiting embodiments of the present technology, one or more of the internal components of the LiDAR system 300 are disposed in a common housing 330 as depicted in Figure 3. In some embodiments of the present technology, the controller 310 could be located outside of the common housing 330 and communicatively connected to the components therein.

Generally speaking, the LiDAR system 300 operates as follows: the light source 302 of the LiDAR system 300 emits pulses of light, forming an output beam 314; the scanner unit 308 scans the output beam 314 across the surroundings 250 of the vehicle 220 for locating/capturing data of *a priori* unknown objects (such as an object 320) therein, for example, for generating a multi-dimensional map of the surroundings 250 where objects (including the object 320) are represented in a form of one or more data points. The light source 302 and the scanner unit 308 will be described in more detail below.

As certain non-limiting examples, the object 320 may include all or a portion of a person, vehicle, motorcycle, truck, train, bicycle, wheelchair, pushchair, pedestrian, animal, road sign, traffic light, lane marking, road-surface marking, parking space, pylon, guard rail, traffic barrier, pothole, railroad crossing, obstacle in or near a road, curb, stopped vehicle on or beside a road, utility pole, house, building, trash can, mailbox, tree, any other suitable object, or any suitable combination of all or part of two or more objects.

Further, let it be assumed that the object 320 is located at a distance 318 from the LiDAR system 300. Once the output beam 314 reaches the object 320, the object 320 generally reflects at least a portion of light from the output beam 314, and some of the reflected light beams may return back towards the LiDAR system 300, to be received in the form of an input beam 316. By reflecting, it is meant that at least a portion of light beam from the output beam 314 bounces off the object 320. A portion of the light beam from the output beam 314 may be absorbed or scattered by the object 320.

Accordingly, the input beam 316 is captured and detected by the LiDAR system 300 via the receiving unit 306. In response, the receiving unit 306 is then configured to generate one or more representative data signals. For example, the receiving unit 306 may generate an output electrical signal (not depicted) that is representative of the input beam 316. The receiving unit 306 may also provide the so-generated electrical signal to the controller 310 for further processing. Finally, by measuring a time between emitting the output beam 314 and receiving the input beam 316 the distance 318 to the object 320 is calculated by the controller 310.

As will be described in more detail below, the beam splitting element 304 is utilized for directing the output beam 314 from the light source 302 to the scanner unit 308 and for directing the input beam 316 from the scanner unit to the receiving unit 306.

Use and implementations of these components of the LiDAR system 300, in accordance with certain non-limiting embodiments of the present technology, will be described immediately below.

**Light Source**

The light source 302 is communicatively coupled to the controller 310 and is configured to emit light having a given operating wavelength. To that end, in certain non-limiting embodiments of the present technology, the light source 302 could include at least one laser preconfigured for operation at the given operating wavelength. The given operating wavelength of the light source 302 may be in the infrared, visible, and/or ultraviolet portions of the electromagnetic spectrum. For example, the light source 302 may include at least one laser with an operating wavelength between about 650 nm and 1150 nm. Alternatively, the light source 302 may include a laser diode configured to emit light at a wavelength between about 800 nm and about 1000 nm, between about 850 nm and about 950 nm, or between about 1300 nm and about 1600 nm. In certain other embodiments, the light source 302 could include a light emitting diode (LED).

The light source 302 of the LiDAR system 300 is generally an eye-safe laser, or put another way, the LiDAR system 300 may be classified as an eye-safe laser system or laser product. Broadly speaking, an eye-safe laser, laser system, or laser product may be a system with some or all of: an emission wavelength, average power, peak power, peak intensity, pulse energy, beam size, beam divergence, exposure time, or scanned output beam such that emitted light from this system presents little or no possibility of causing damage to a person's eyes.

According to certain non-limiting embodiments of the present technology, the operating wavelength of the light source 302 may lie within portions of the electromagnetic spectrum that correspond to light produced by the Sun. Therefore, in some cases, sunlight may act as background noise, which can obscure the light signal detected by the LiDAR system 300. This solar background noise can result in false-positive detections and/or may otherwise corrupt measurements of the LiDAR system 300. Although it may be feasible in some cases to increase a Signal-to-Noise Ratio (SNR) of the LiDAR system 300 by increasing the power level of the output beam 314, this may not be desirable in at least some situations. For example, it may not in some implementations be desirable to increase power levels of the output beam 314 to levels beyond eye-safe thresholds.

The light source 302 includes a pulsed laser configured to produce, emit, or radiate pulses of light with a certain pulse duration. For example, in some non-limiting embodiments of the present technology, the light source 302 may be configured to emit pulses with a pulse duration (e.g., pulse width) ranging from 10 ps to 100 ns. In other non-limiting embodiments of the present technology, the light source 302 may be configured to emit pulses at a pulse repetition frequency of approximately 100 kHz to 5 MHz or a pulse period (e.g., a time between consecutive pulses) of approximately 200 ns to 10 $\mu$s. Overall, however, the light source 302 can generate the output beam 314 with any suitable average optical power, and the output beam 314 may include optical pulses with any suitable pulse energy or peak optical power for a given application.

In some non-limiting embodiments of the present technology, the light source 302 could include one or more laser diodes, including but not limited to: Fabry-Perot laser diode, a quantum well laser, a distributed Bragg reflector (DBR) laser, a distributed feedback (DFB) laser, or a vertical-cavity surface-emitting laser (VCSEL). Just as examples, a given laser diode operating in the light source 302 may be an aluminum-gallium-arsenide (AlGaAs) laser diode, an indium-gallium-arsenide (InGaAs) laser diode, or an indium-gallium-arsenide-phosphide (InGaAsP) laser diode, or any other suitable laser diode. It is also contemplated that the light source 302 may include one or more laser diodes that are current-modulated to produce optical pulses.

In some non-limiting embodiments of the present technology, the light source 302 is generally configured to emit the output beam 314 that is a collimated optical beam, but it is contemplated that the beam produced could have any suitable beam divergence for a given application. Broadly speaking, divergence of the output beam 314 is an angular measure of an increase in beam cross-section size (e.g., a beam radius or beam diameter) as the output beam 314 travels away from the light source 302 or the LiDAR system 300. In some non-limiting embodiments of the present technology, the output beam 314 may have a substantially circular cross-section.

It is also contemplated that the output beam 314 emitted by light source 302 could be unpolarized or randomly polarized, could have no specific or fixed polarization (e.g., the polarization may vary with time), or could have a particular polarization (e.g., the output beam 314 may be linearly polarized, elliptically polarized, or circularly polarized).

In at least some non-limiting embodiments of the present technology, the output beam 314 and the input beam 316 may be substantially coaxial. In other words, the output beam 314 and input beam 316 may at least partially overlap or share a common propagation axis, so that the input beam 316 and the output beam 314 travel along substantially the same optical path (albeit in opposite directions). Nevertheless, in other non-limiting embodiments of the present technology, the output beam 314 and the input beam 316 may not be coaxial, or in other words, may not overlap or share a common propagation axis inside the LiDAR system 300, without departing from the scope of the present technology.

It should be noted that in at least some non-limiting embodiments of the present technology, the light source 302 could be rotatable, such as by 360 degrees or less, about the axis of rotation (not depicted) of the LiDAR system 300 when the LiDAR system 300 is implemented in a rotatable configuration. However, in other embodiments, the light source 302 may be stationary even when the LiDAR system 300 is implemented in a rotatable configuration, without departing from the scope of the present technology.

**Beam Splitting Element**

With continued reference to Figure 3, there is further provided the beam splitting element 304 disposed in the housing 330. For example, as previously mentioned, the beam splitting element 304 is configured to direct the output beam 314 from the light source 302 towards the scanner unit 308. The beam splitting element 304 is also arranged and configured to direct the input beam 316 reflected off the object 320 to the receiving unit 306 for further processing thereof by the controller 310.

However, in accordance with other non-limiting embodiments of the present technology, the beam splitting element 304 may be configured to split the output beam 314 into at least two components of lesser intensity including a scanning beam (not separately depicted) used for scanning the surroundings 250 of the LiDAR system 300, and a reference beam (not separately depicted), which is further directed to the receiving unit 306.

In other words, in these embodiments, the beam splitting element 304 can be said to be configured to divide intensity (optical power) of the output beam 314 between the scanning beam and the reference beam. In some non-limiting embodiments of the present technology, the beam splitting element 304 may be configured to divide the intensity of the output beam 314 between the scanning beam and the reference beam equally. However, in other non-limiting embodiments of the present technology, the beam splitting element 304 may be configured to divide the intensity of the output beam 314 at any predetermined splitting ratio. For example, the beam splitting element 304 may be configured to use up to 80% of the intensity of the output beam 314 for forming the scanning beam, and the remainder of up to 20% of the intensity of the output beam 314 — for forming the reference beam. In yet other non-limited embodiments of the present technology, the beam splitting element 304 may be configured to vary the splitting ratio for forming the scanning beam (for example, from 1% to 95% of the intensity of the output beam 314).

It should further be noted that some portion (for example, up to 10%) of the intensity of the output beam 314 may be absorbed by a material of the beam splitting element 304, which depends on a particular configuration thereof.

Depending on the implementation of the LiDAR system 300, the beam splitting element 304 could be provided in a variety of forms, including but not limited to: a glass prism-based beam splitter component, a half-silver mirror-based beam splitter component, a dichroic mirror prism-based beam splitter component, a fiber-optic-based beam splitter component, and the like.

Thus, according to the non-limiting embodiments of the present technology, a nonexhaustive list of adjustable parameters associated with the beam splitting element 304, based on a specific application thereof, may include, for example, an operating wavelength range, which may vary from a finite number of wavelengths to a broader light spectrum (from 1200 to 1600 nm, as an example); an income incidence angle; polarizing/non-polarizing, and the like.

In a specific non-limiting example, the beam splitting element 304 can be implemented as a fiber-optic-based beam splitter component that may be of a type available from **OZ Optics Ltd.** of 219 Westbrook Rd Ottawa, Ontario K0A 1L0 Canada. It should be expressly understood that the beam splitting element 304 can be implemented in any other suitable equipment.

**Internal Beam Paths**

As is schematically depicted in Figure 3, the LiDAR system 300 forms a plurality of internal beam paths 312 along which the output beam 314 (generated by the light source 302) and the input beam 316 (received from the surroundings 250). Specifically, light propagates along the internal beam paths 312 as follows: the light from the light source 302 passes through the beam splitting element 304, to the scanner unit 308 and, in turn, the scanner unit 308 directs the output beam 314 outward towards the surroundings 250.

Similarly, the input beam 316 follows the plurality of internal beam paths 312 to the receiving unit 306. Specifically, the input beam 316 is directed by the scanner unit 308 into the LiDAR system 300 through the beam splitting element 304, toward the receiving unit 306. In some implementations, the LiDAR system 300 could be arranged with beam paths that direct the input beam 316 directly from the surroundings 250 to the receiving unit 306 (without the input beam 316 passing through the scanner unit 308).

It should be noted that, in various non-limiting embodiments of the present technology, the plurality of internal beam paths 312 may include a variety of optical components. For example, the LiDAR system 300 may include one or more optical components configured to condition, shape, filter, modify, steer, or direct the output beam 314 and/or the input beam 316. For example, the LiDAR system 300 may include one or more lenses, mirrors, filters (e.g., band pass or interference filters), optical fibers, circulators, beam splitters, polarizers, polarizing beam splitters, wave plates (e.g., half-wave or quarter-wave plates), diffractive elements, microelectromechanical (MEM) elements, collimating elements, or holographic elements.

It is contemplated that in at least some non-limiting embodiments of the present technology, the given internal beam path and the other internal beam path from the plurality of internal beam paths 312 may share at least some common optical components, however, this might not be the case in each and every embodiment of the present technology.

**Scanner Unit**

Generally speaking, the scanner unit 308 steers the output beam 314 in one or more directions downrange towards the surroundings 250. The scanner unit 308 is communicatively coupled to the controller 310. As such, the controller 310 is configured to control the scanner unit 308 so as to guide the output beam 314 in a desired direction downrange and/or along a predetermined scan pattern. Broadly speaking, in the context of the present specification "scan pattern" may refer to a pattern or path along which the output beam 314 is directed by the scanner unit 308 during operation.

In certain non-limiting embodiments of the present technology, the controller 310 is configured to cause the scanner unit 308 to scan the output beam 314 over a variety of horizontal angular ranges and/or vertical angular ranges; the total angular extent over which the scanner unit 308 scans the output beam 314 is referred to herein as the field of view. It is contemplated that the particular arrangement, orientation, and/or angular ranges could depend on the particular implementation of the LiDAR system 300. The field of view generally includes a plurality of regions of interest (ROIs), defined as portions of the field of view which may contain, for instance, objects of interest. In some implementations, the scanner unit 308 can be configured to further investigate a selected region of interest (ROI) 325. The ROI 325 of the LiDAR system 300 may refer to an area, a volume, a region, an angular range, and/or portion(s) of the surroundings 250 about which the LiDAR system 300 may be configured to scan and/or can capture data.

It should be noted that a location of the object 320 in the surroundings 250 of the vehicle 220 may be overlapped, encompassed, or enclosed at least partially within the ROI 325 of the LiDAR system 300.

It should be noted that, according to certain non-limiting embodiments of the present technology, the scanner unit 308 may be configured to scan the output beam 314 horizontally and/or vertically, and as such, the ROI 325 of the LiDAR system 300 may have a horizontal direction and a vertical direction. For example, the ROI 325 may be defined by 45 degrees in the horizontal direction, and by 45 degrees in the vertical direction. In some implementations, different scanning axes could have different orientations.

In certain non-limiting embodiments of the present technology, the scanner unit 308 may include a variety of optical components and/or mechanical-type components for performing the scanning of the output beam 314. For example, the scanner unit 308 may include one or more mirrors, prisms, lenses, MEM components, piezoelectric components, optical fibers, splitters, diffractive elements, collimating elements, and the like. It should be noted that the scanner unit 308 may also include one or more additional actuators (not separately depicted) driving at least some of the other optical components to rotate, tilt, pivot, or move in an angular manner about one or more axes, for example.

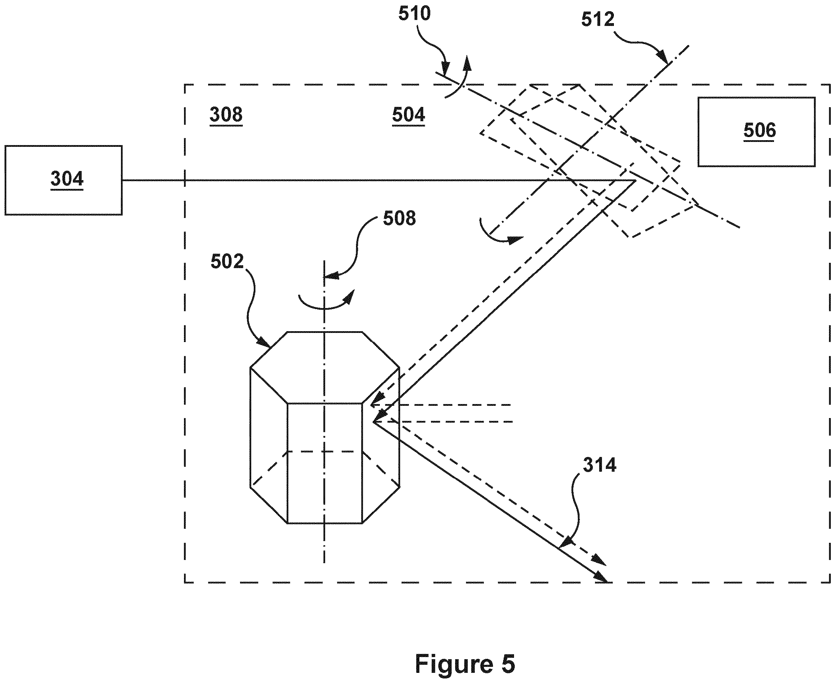

How the scanner unit 308 is implemented, according to the present technology, as well as which components it includes and functionality thereof will be described below with reference to Figures 5 to 7.

The LiDAR system 300 may thus make use of the predetermined scan pattern to generate a point cloud substantially covering the ROI 325 of the LiDAR system 300. As will be described in greater detail herein further below, this point cloud of the LiDAR system 300 may be used to render a multi-dimensional map of objects in the surroundings 250 of the vehicle 220.

As will become apparent from the description provided herein below, in certain non-limiting embodiments of the present technology, the predetermined scan pattern for scanning the ROI 325 may be associated with a respective scanning frequency.

### Receiving Unit

According to certain non-limiting embodiments of the present technology, the receiving unit 306 is communicatively coupled to the controller 310 and may be implemented in a variety of ways. According to the present technology, the receiving unit 306 includes a photodetector, but could include (but is not limited to) a photoreceiver, optical receiver, optical sensor, detector, optical detector, optical fibers, and the like. As mentioned above, in some non-limiting embodiments of the present technology, the receiving unit 306 may be configured to acquire or detects at least a portion of the input beam 316 and produces an electrical signal that corresponds to the input beam 316. For example, if the input beam 316 includes an optical pulse, the receiving unit 306 may produce an electrical current or voltage pulse that corresponds to the optical pulse detected by the receiving unit 306.

It is contemplated that, in various non-limiting embodiments of the present technology, the receiving unit 306 may be implemented with one or more avalanche photodiodes (APDs), one or more single-photon avalanche diodes (SPADs), one or more PN photodiodes (e.g., a photodiode structure formed by a p-type semiconductor and a n-type semiconductor), one or more PIN photodiodes (e.g., a photodiode structure formed by an undoped intrinsic semiconductor region located between p-type and n-type regions), and the like.

In some non-limiting embodiments, the receiving unit 306 may also include circuitry that performs signal amplification, sampling, filtering, signal conditioning, analog-to-digital conversion, time-to-digital conversion, pulse detection, threshold detection, rising-edge detection, falling-edge detection, and the like. For example, the receiving unit 306 may include electronic components configured to convert a received photocurrent (e.g., a current produced by an APD in response to a received optical signal) into a voltage signal. The receiving unit 306 may also include additional circuitry for producing an analog or digital output signal that corresponds to one or more characteristics (e.g., rising edge, falling edge, amplitude, duration, and the like) of a received optical pulse.

### Controller

Depending on the implementation, the controller 310 may include one or more processors, an application-specific integrated circuit (ASIC), a field-programmable gate array (FPGA), and/or other suitable circuitry. The controller 310 may also include non-transitory computer-readable memory to store instructions executable by the controller 310 as well as data which the controller 310 may produce based on the signals acquired from other internal components of the LiDAR system 300 and/or may provide signals to the other internal components of the LiDAR system 300. The memory can include volatile (e.g., RAM) and/or non-volatile (e.g., flash memory, a hard disk) components. The controller 310 may be configured to generate data during operation and store it in the memory. For example, this data generated by the controller 310 may be indicative of the data points in the point cloud of the LiDAR system 300.

It is contemplated that, in at least some non-limiting embodiments of the present technology, the controller 310 could be implemented in a manner similar to that of implementing the electronic device 210 and/or the computer system 100, without departing from the scope of the present technology. In addition to collecting data from the receiving unit 306, the controller 310 could also be configured to provide control signals to, and potentially receive diagnostics data from, the light source 302 and the scanner unit 308.

As previously stated, the controller 310 is communicatively coupled to the light source 302, the scanner unit 308, and the receiving unit 306. In some non-limiting embodiments of the present technology, the controller 310 may be configured to receive electrical trigger pulses from the light source 302, where each electrical trigger pulse corresponds to the emission of an optical pulse by the light source 302. The controller 310 may further provide instructions, a control signal, and/or a trigger signal to the light source 302 indicating when the light source 302 is to produce optical pulses indicative, for example, of the output beam 314.

Just as an example, the controller 310 may be configured to send an electrical trigger signal that includes electrical pulses, so that the light source 302 emits an optical pulse, representable by the output beam 314, in response to each electrical pulse of the electrical trigger signal. It is also contemplated that the controller 310 may cause the light source 302 to adjust one or more characteristics of output beam 314 produced by the light source 302 such as, but not limited to: frequency, period, duration, pulse energy, peak power, average power, and wavelength of the optical pulses.

By the present technology, the controller 310 is configured to determine a "time-of-flight" value for an optical pulse in order to determine the distance between the LiDAR system 300 and one or more objects in the field of view, as will be described further below. The time of flight is based on timing information associated with (i) a first moment in time when a given optical pulse (for example, of the output beam 314) was emitted by the light source 302, and (ii) a second moment in time when a portion of the given optical pulse (for example, from the input beam 316) was detected or received by the receiving unit 306. In some non-limiting embodiments of the present technology, the first moment may be indicative of a moment in time when the controller 310 emits a respective electrical pulse associated with the given optical pulse; and the second moment in time may be indicative of a moment in time when the controller 310 receives, from the receiving unit 306, an electrical signal generated in response to receiving the portion of the given optical pulse from the input beam 316.

In other non-limiting embodiments of the present technology, where the beam splitting element 304 is configured to split the output beam 314 into the scanning beam (not depicted) and the reference beam (not depicted), the first moment in time may be a moment in time of receiving, from the receiving unit 306, a first electrical signal generated in response to receiving a portion of the reference beam. Accordingly, in these embodiments, the second moment in time may be determined as the moment in time of receiving, by the controller 310 from the receiving unit 306, a second electrical signal generated in response to receiving an other portion of the given optical pulse from the input beam 316.

By the present technology, the controller 310 is configured to determine, based on the first moment in time and the second moment in time, a time-of-flight value and/or a phase modulation value for the emitted pulse of the output beam 314. The time-of-light value *T*, in a sense, a "round-trip" time for the emitted pulse to travel from the LiDAR system 300 to the object 320 and back to the LiDAR system 300. The controller 310 is thus broadly configured to determine the distance 318 in accordance with the following equation:

$$D = \frac{c \cdot T}{2}, \tag{1}$$

wherein *D* is the distance 318, *T* is the time-of-flight value, and c is the speed of light (approximately $3.0 \times 10^8$ m/s).

As previously alluded to, the LiDAR system 300 may be used to determine the distance 318 to one or more other potential objects located in the surroundings 250. By scanning the output beam 314 across the ROI 325 of the LiDAR system 300 in accordance with the predetermined scan pattern, the controller 310 is configured to map distances (similar to the distance 318) to respective data points within the ROI 325 of the LiDAR system 300. As a result, the controller 310 is generally configured to render these data points captured in succession (e.g., the point cloud) in a form of a multi-dimensional map. In some implementations, data related to the determined time of flight and/or distances to objects could be rendered in different informational formats.

As an example, this multi-dimensional map may be used by the electronic device 210 for detecting, or otherwise identifying, objects or determining a shape or distance of potential objects within the ROI 325 of the LiDAR system 300. It is contemplated that the LiDAR system 300 may be configured to repeatedly/iteratively capture and/or generate point clouds at any suitable rate for a given application.

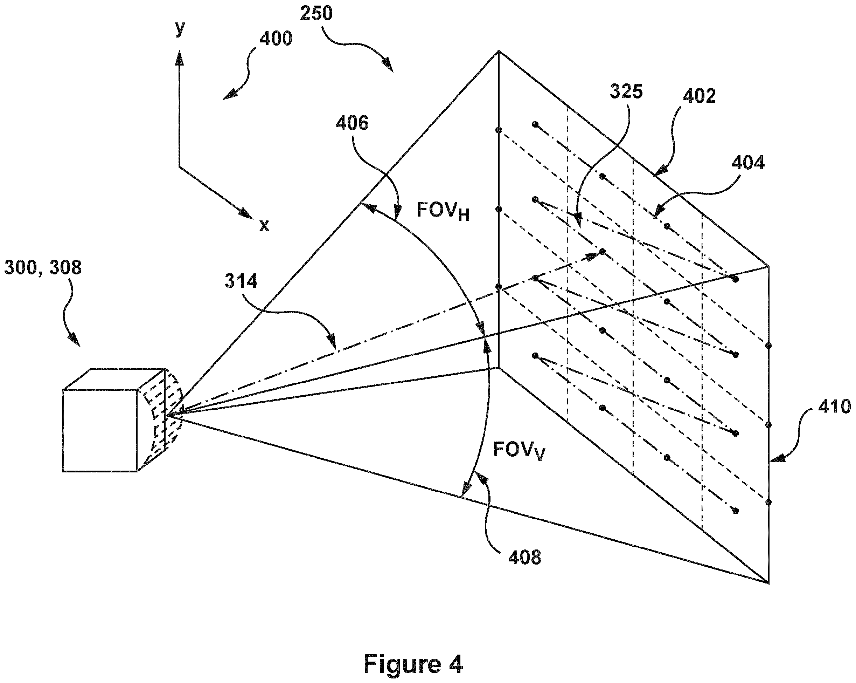

With reference to Figures 4 to 7, the scanner unit 308 for using with various implementations of the LiDAR system 300 will be described in greater detail.

**Field of View Determination**

With reference to Figure 4, there is depicted a schematic diagram of the scanner unit 308 scanning the output beam 314 across the surroundings 250 of the vehicle 220, within a field of view 402 associated with the scanner unit 308, in accordance with certain non-limiting embodiments of the present technology.

In accordance with the non-limiting embodiments of the present technology, the field of view 402 is defined by the controller 310 causing the scanner unit 308 to scan the output beam 314 according to a predetermined pattern 404 within a coordinate system 400 associated with the LiDAR system 300. Thus, as it can be appreciated from Figure 4, first, the controller 310 is configured to cause the scanner unit 308 to scan the output beam 314 at a predetermined maximum X coordinate value (not depicted) along an X axis of the coordinate system 400, thereby defining a horizontal component 406 of the field of view 402. Second, by causing gradual descent of the output beam 314 along an Y axis of the coordinate system 400 after each scanning iteration over the horizontal component 406 to a predetermined maximum Y coordinate value (not depicted), the controller 310 is configured to define a vertical component 408 of the field of view 402.

It should be noted that, although in the depicted embodiments of Figure 4, the predetermined pattern 404 defines, in a sense, a horizontal zigzag path of the output beam 314 within the field of view 402, in other non-limiting embodiments of the present technology, the predetermined pattern 404 may define a different path of the output beam 314. For example, the controller 310 could be configured to define the predetermined pattern 404 by causing the scanner unit 308 to scan the output beam 314 first along the Y axis gradually shifting it along the X axis of the coordinate system 400. In another example, the controller 310 could be configured to define the predetermined pattern 404 by alternating a direction of scanning the output beam 314 along the X axis after each instance of descent of the output beam 314 along the Y axis.

Further, as mentioned hereinabove, by the present technology, the field of view 402 of the scanner unit 308 may include a plurality of ROIs 410. For example, in some non-limiting embodiments of the present technology, each one of the plurality of ROIs 410 may correspond to a respective fixed spatial position of the scanner unit 308 relative to the LiDAR system 300.

Thus, by the present technology, the controller 310 is configured to further investigate a given one of the plurality of ROIs 410 defined within the field of view 402, such as the ROI 325. To that end, the controller 310 is configured to scan the output beam 314 over the ROI 325 to generate data points indicative of the object 320 (not depicted in Figure 4) located therein. As it will become apparent from the description provided herein below, in some non-limiting embodiments of the present technology, the horizontal direction and in the vertical direction of scanning the ROI 325 can be defined also by the coordinate system 400, that is, along the X axis and the Y axis thereof, respectively.

## Specific System Components

With reference to Figure 5, there is depicted a schematic diagram of the scanner unit 308 implemented in accordance with certain non-limiting embodiments of the present technology.

According to certain non-limiting embodiments of the present technology, the scanner unit 308 includes additional elements for scanning the output beam 314 over the ROI 325. More specifically, the scanner unit 308 includes a first optical element 502 and a second optical element 504. In some non-limiting embodiments of the present technology, the beam splitting element 304 (and thus the light source 302 which is not depicted in Figure 5), the second optical element 504, and the first optical element 502 can be arranged sequentially along a common optical axis (not separately numbered), as depicted in Figure 5.

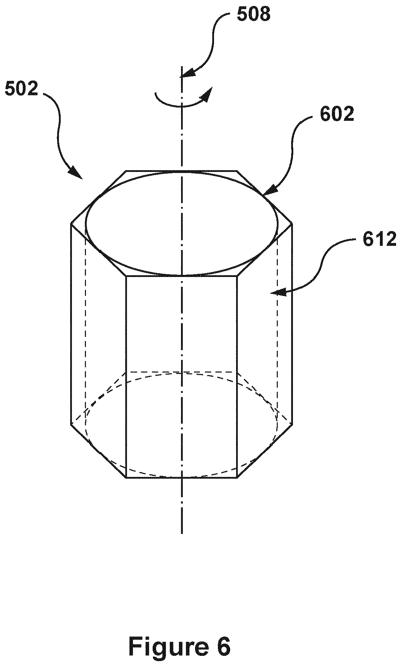

In accordance with certain non-limiting embodiments of the present technology, the first optical element 502 could be a prism, example of which is schematically depicted in Figure 6. As it can be appreciated from Figure 6, the first optical element 502 includes (1) a spinning core element 602 configured for rotating about a first rotation axis 508; and a plurality of reflective faces 612 arranged around the spinning core element 602.

By the present technology, the first optical element 502 is communicatively coupled with the controller 310 for causing rotation thereof about the first rotation axis 508. In some non-limiting embodiments of the present technology, the first rotation axis 508 is defined as one of symmetry axes of the first optical element 502. In certain non-limiting embodiments of the present technology, the controller 310 is configured to cause the first optical element 502 to rotate about the first rotation axis 508 at a constant rotation speed (such as 400 rpm, for example) over a predetermined time interval of operation of the LiDAR system 300.

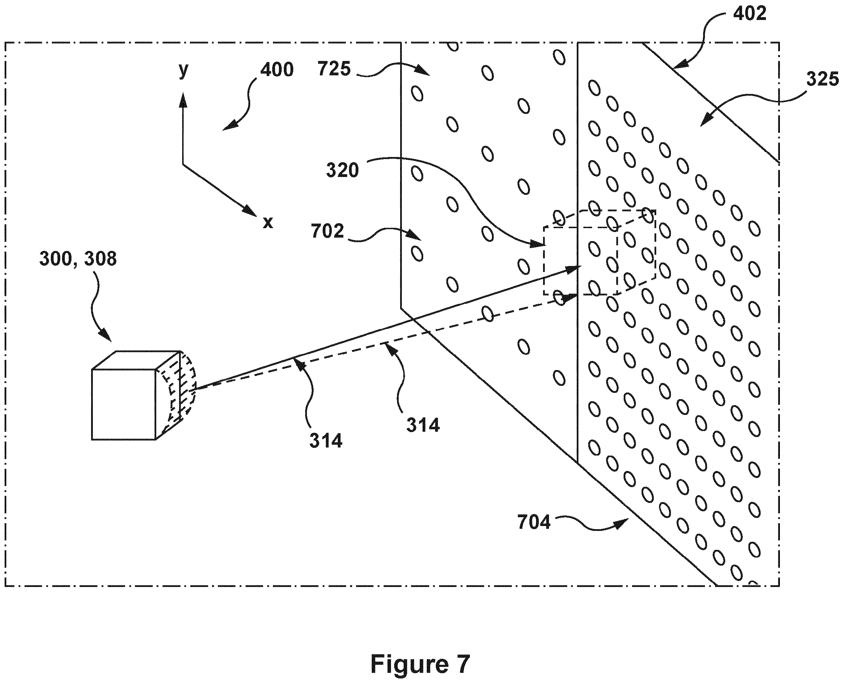

Thus, by causing the first optical element 502 to rotate about the first rotation axis 508, the controller 310 is configured to scan the output beam 314 over a given ROI (such as the ROI 325) horizontally, in a direction perpendicular to the first rotation axis 508, at a frequency of scanning thereof corresponding to the rotation speed of the first optical element 502, which will be described in greater detail below with reference to Figure 7.

As depicted in Figure 6, the plurality of reflective faces 612 includes 6 (six) reflective faces arranged around the spinning core element 602. However, the plurality of reflective faces 612 could include a different number of reflective faces, such as 4, 8, 10, or even more, without departing from the scope of the present technology. Further, although in Figure 6 each reflective face of the plurality of reflective faces 612 has a rectangular form, other form factors, such as triangular, polygonal, or even circular are also possible.

Further, in some non-limiting embodiments of the present technology, as depicted in Figure 6, each one of the plurality of reflective faces 612 is arranged around the spinning core element 602 parallel to the first rotation axis 508. However, in other non-limiting embodiments of the present technology, each one of the plurality of reflective faces, at one of its vertical edges, could be inclined at a respective predetermined angle, such as 5, 10, or 20 degrees, relative to the first rotation axis 508.

According to certain non-limiting embodiments of the present technology, a surface of a given one of the plurality of reflective faces 612 is configured for specular reflection of light incident thereupon (such as the output beam 314 emitted by the light source 302), and could thus include a plane mirror. However, in other non-limiting embodiments of the present technology, the surface of the given reflective face of the first optical element 502 could be a mirror, surface of which has a predetermined curvature, such as, without being limited to, a concave mirror, a convex mirror, and a mirror with variable curvature providing diffuse reflection of the output beam 314 incident thereupon.

Finally, it should be noted that, in some non-limiting embodiments of the present technology, the given one of the plurality of reflective faces 612 is configured for providing specular reflection of the output beam 314 within a predetermined wavelength range, such as, without limitation, from around 400 nm to around 700 nm (a visible portion of the electromagnetic spectrum), from around 10 nm to around 400 nm (a near ultraviolet portion of the electromagnetic spectrum), from around 700 nm to around 1050 nm (a near infrared portion of the electromagnetic spectrum), and the like. Further, in certain non-limiting embodiments of the present technology, a wavelength (or a range thereof), at which the given one of the plurality of reflective surfaces is configured for operation can be associated with the operating wavelength of the light source 302.

Additionally, as it may become apparent to a person skilled in the art, the spinning core element 602 is depicted in Figure 6 as having substantially cylindrical form only for purposes of explanation of operation principles of the first optical element 502, and in certain non-limiting embodiments of the present technology, the spinning core element 602 could have a different form and/or include additional elements for fixing/installation thereof within the first optical element 502.

In a specific non-limiting example, the first optical element 502 can be implemented as a polygon laser multi-line scanner of a type available from **Mirada Technologies Inc.** of 1485 Bayshore Blvd., San Francisco, California, 94124, USA. It should be expressly understood that the first optical element 502 can be implemented in any other suitable equipment.

Referring back to Figure 5, according to certain non-limiting embodiments of the present technology, the second optical element 504 is a mirror. Similar to the description provided hereinabove in respect of the plurality of reflective faces 612, in some non-limiting embodiments of the present technology, the second optical element 504 can be, without limitation, one of: a plane mirror, a concave mirror, a convex mirror, and a mirror with variable curvature. However, in other non-limiting embodiments of the present technology, the second optical element 504 can be a Risley prism.

In some non-limiting embodiments of the present technology, the second optical element 504 is configured to rotate. To that end, the second optical element 504 is coupled with a galvanometer 506, further communicatively coupled with the controller 310. Thus, the controller 310 can be configured to cause rotation of the second optical element 504 for directing the output beam 314, incident thereupon from the beam splitting element 304, to the first optical element 502.

In a specific non-limiting example, the galvanometer 506 can be of a type available from **Sino-Galvo (Jiangsu) Technology Co., Ltd** of 33, Area D, No. 99 Jing 15th Road, New District, Zhenjiang City, Jiangsu Province, China. It should be expressly understood that the galvanometer 506 can be implemented in any other suitable equipment.

In some non-limiting embodiments of the present technology, the second optical element 504 is configured to pivot about a second rotation axis 510 extending therethrough. For example, and not as a limitation, the second rotation axis 510 can be defined as one of symmetry axes of the second optical element 504, which can be parallel to the first rotation axis 508 associated with the first optical element 502.

Thus, in certain non-limiting embodiments of the present technology, by causing the second optical element 504 to pivot about the second rotation axis 510, the controller 310 is configured to cause the second optical element 504 to provide the output beam 314 to the first optical element 502 at multiple incident angles in a given scanning cycle of the first optical element 502, thereby increasing the frequency of scanning of the output beam 314 along the horizontal direction of the ROI 325. More specifically, the frequency of scanning of the output beam 314 along the horizontal direction of the ROI 325 increases as a result of the second optical element 504 moving back relative to the rotation of the first optical element 502 about the first rotation axis 508. Accordingly, by modifying a frequency of pivoting of the second optical element 504 about the second rotation axis 510, the controller 310 can be configured to adjust the frequency of scanning the output beam 314 over the ROI 325 to a predetermined value, as will be described in greater detail below with reference to Figure 7.

Further, in certain non-limiting embodiments of the present technology, the second optical element 504 is configured to rotate about a third rotation axis 512 perpendicular to the second rotation axis 510. In some non-limiting embodiments of the present technology, the third rotation axis 512 can be an other symmetry axis of the second optical element 504.

Thus, according to certain non-limiting embodiments of the present technology, by causing the second optical element 504 to rotate about the third rotation axis 512, the controller 310 is configured to scan the output beam 314 along a direction parallel to the first rotation axis 508, that is, a vertical direction of the ROI 325. In other words, while rotating about the third rotation axis 512, the second optical element 504 is configured to continuously modify an angle of incidence of the output beam 314 thereon, thereby causing it to travel on the first optical element 502 along the first rotation axis 508, thereby scanning the ROI 325 in the vertical direction thereof, which will be discussed in greater detail below with reference to Figure 7.

According to the present technology, at a given moment in time, the controller 310, via the galvanometer 506, may be configured to cause rotation of the second optical element 504 in different modes. For example, in some non-limiting embodiments of the present technology, at the given moment in time, the second optical element 504 can be caused to rotate about the second rotation axis 510 only. In other non-limiting embodiments of the present technology, at the given moment in time, the second optical element 504 can be caused to rotate about the third rotation axis 512 only. In yet other non-limiting embodiments of the present technology, at the given moment in time, the controller 310 can be configured to cause simultaneous rotation of the second optical element 504 about the second rotation axis 510 and the third rotation axis 512.

In a specific non-limiting example, the second optical element 504 can be implemented as dual axis resonance mirror of a type available from **Optotune Switzerland AG** of Bernstrasse, 388, CH-8953, Dietikon, Switzerland. It should be expressly understood that the second optical element 504 can be implemented in any other suitable equipment.

With reference to Figure 7, there is depicted a schematic diagram of scanning the ROI 325 using the scanner unit 308 including the first optical element 502 and the second optical element 504 (depicted in Figure 5), in accordance with certain non-limiting embodiments of the present technology.

As previously alluded to, in order to generate a given plurality of data points indicative of objects located in the surroundings 250 of the vehicle 220, the controller 310 is configured to: (1) generate, using the light source 302 (depicted in Figure 3), the output beam 314; scanning, by the scanner unit 308, the output beam 314 over the field of view 402; and (3) receive, using the receiving unit 306, the input beam 316 (both depicted in Figure 3) reflected off the objects located in the surroundings 250. As it may become apparent, density of data points within the given plurality of data points depends on the frequency of scanning of the output beam 314 over the field of view 402 of the LiDAR system 300.

According to certain non-limiting embodiments of the present technology, the controller 310 is configured to cause the scanner unit 308 to modify the frequency of scanning for scanning different ROIs based on certain conditions.

Let it be assumed that the predetermined pattern 404 defines the path of the output beam 314 over the field of view 402 in the direction of the X axis of the coordinate system 400. Thus, the controller 310 could be configured to scan a previous ROI 725 and the ROI 325 in sequence.

Referring back to Figure 5 and with continued reference to Figure 7, in some non-limiting embodiments of the present technology, the controller 310 can be configured to (1) cause rotation of the first optical element 502 about the first rotation axis 508 at the constant rotation speed, thereby scanning the previous ROI 725 horizontally, along the X axis of the coordinate system 400, at a given frequency of scanning; and (2) cause rotation of the second optical element 504 about the third rotation axis 512, thereby scanning the previous ROI 725 vertically, along the Y axis of the coordinate system 400. Further, by processing the input beam 316 (not depicted in Figure 7) generated in response to each instance of scanning of the output beam 314, the controller 310 can further be configured to generate a first plurality of data points 702. Further, by analyzing the first plurality of data points 702, the controller 310 can be configured to detect at least a portion of the object 320 located in a portion of the surroundings 250 associated with the previous ROI 725.

According to certain non-limiting embodiments of the present technology, the controller 310 could be configured to identify a type of the object 320. In some non-limiting embodiments of the present technology, the type of the object 320 can include a first type and a second type. Broadly speaking, it is not limited as to how the first type and the second type are defined; however, in some non-limiting embodiments of the present technology, the first type and the second type of the object 320 can be defined based on certain inherent object characteristics thereof. More specifically, in these embodiments, objects of the first type may include dynamic objects, such as other vehicles, pedestrians, and animals, as an example; and objects of the second type may include static objects such as street lamps, guard rails, trees, and the like.

However, in other non-limiting embodiments of the present technology, the first type and the second type of the object 320 can be defined based on a predetermined safety class thereof, or in other words, a current risk of accident associated therewith, as an example. Thus, in these embodiments, objects of the first type may include objects of greater interest that can be, for example, associated with an elevated risk of accident, such as, without limitation: pedestrian crosswalks, road signs, construction sites, parked cars, and the like. In this regard, the objects of the first type can be said to be associated with unexpected presence of people and/or certain road safety regulations posing higher risks of accident at least for the vehicle 220. By contrast, in these embodiments, the objects of the second type can include objects of general interest, that is, for example, those that are not associated with a higher risk of accident, such as, without limitation, buildings, plants, the sky, and the like.

According to certain non-limiting embodiments of the present technology, based on the type of the object 320, the controller 310 can be configured to modify the scanning frequency of the output beam in an ROI following the previous ROI 725, that is, as depicted in Figure 7, in the ROI 325. By so doing, the controller 310 can be configured to pre-select ROIs for additional inspection within the field of view 402 of the scanner unit 308.

Thus, in some non-limiting embodiments of the present technology, in response to identifying, based on the first plurality of data points 702, the object 320 as being of the first type, the controller 310 could be configured to cause additional pivoting of the second optical element 504 about the second rotation axis 510, thereby increasing the given frequency of scanning of the ROI 325. By so doing, the controller 310 can be configured to generate a second plurality of data points 704 of higher density of data points than that of the first plurality of data points 702.

It should be noted that increasing the given frequency of scanning by causing the second optical element 504 to pivot about the second rotation axis 510, and not by increasing the rotation speed of the first optical element 502 about the first rotation axis 508, could be associated with an increased response rate of the scanner unit 308. As the first optical element 502, having a relatively large mass, has certain inertia, which may not allow for an immediate change of the rotation speed thereof; and, as a result, the scanner unit 308 could pass the ROI 325 without having time to adjust the given frequency of scanning. By contrast, modifying the given frequency of scanning by using the second optical element 504 does not necessitate changing the rotation speed of the first optical element 502, thereby providing for better responsiveness of the scanner unit 308.

As it may be apparent, based on the higher density of the data points within the second plurality of data points 704, the controller 310 can be configured to generate a more accurate digital representation of the object 320, which may further allow for providing better road safety when generating, based on the digital representation of the object 320, the 3D point map of the surroundings 250 or a current trajectory for the vehicle 220 therewithin.

Further, in other non-limiting embodiments of the present technology (not depicted), in response to identifying, based on the first plurality of data points 702, the object 320 as being of the second type, the controller 310 could be configured to continue scanning the output beam 314 over the ROI 325 with a same level of the given frequency of scanning as over the previous ROI 725.

Finally, in yet other non-limiting embodiments of the present technology (not depicted), in case where the controller 310 has scanned the output beam 314 over the previous ROI 725 at an increased level of the given frequency of scanning, in response to identifying, based on the first plurality of data points 702, the object 320 as being of the second type, the controller 310 could be configured to stop causing the second optical element 504 to pivot about the second rotation axis 510, thereby decreasing the frequency of scanning of the output beam 314 over the ROI 325.

**Method**

Given the architecture and the examples provided hereinabove, it is possible to execute a method for operating an optical system (for example, the scanner unit 308). With reference now to Figure 8, there is depicted a flowchart of a method 800, according to the non-limiting embodiments of the present technology. The method 800 may be executed by the controller 310.

**STEP 802: CAUSING, BY THE CONTROLLER, A LIGHT SOURCE TO EMIT LIGHT, THE LIGHT BEING SCANNED OVER A FIRST DIRECTION BY A FIRST OPTICAL ELEMENT OF THE OPTICAL SYSTEM, THE FIRST OPTICAL ELEMENT ROTATING ABOUT A FIRST AXIS PERPENDICULAR TO THE FIRST DIRECTION DEFINING IN PART A FIELD OF VIEW OF THE OPTICAL SYSTEM**

The method 800 commences at step 802 with the controller 310 being configured to cause the light source 302 to emit the output beam 314. Further, as described above with reference to Figure 3, the output beam 314 is directed to the beam splitting element 304 further directing it to the scanner unit 308. The scanner unit 308 can thus be configured to scan the output beam 314 within the field of view 402 associated with the surroundings 250 of the vehicle 220.

More specifically, as described above with reference to Figures 5 and 7, the scanner unit 308 includes the first optical element 502, which when caused to rotate by the controller 310 about the first rotation axis 508, is configured to scan the output beam 314 over the field of view 402 in the horizontal direction perpendicular to the first rotation axis 508 — along the X axis of the coordinate system 400. Accordingly, the rotation speed of the first optical element 502 about the first rotation axis 508 defines the given frequency of scanning of the output beam 314 over the field of view 402.

Further, in some non-limiting embodiments of the present technology, the scanner unit 308 can further include the second optical element 504 configurable to rotate about the third rotation axis 512, which can be perpendicular to the first rotation axis 508. In this regard, the scanner unit 308 can be configured to scan the field of view 402 in the vertical direction, perpendicular to the horizontal direction — along the Y axis of the coordinate system 400.

The method thus advances to step 804.

**STEP 804: SENSING, BY AT LEAST ONE SENSOR COMMUNICATIVELY COUPLED WITH THE CONTROLLER, A REFLECTED SIGNAL OF LIGHT REFLECTED OFF SURROUNDING OBJECTS IN THE FIELD OF VIEW OF THE OPTICAL SYSTEM**

At step 804, as described above with reference to Figure 3, the output beam 314, having been reflected off one of objects in the surroundings 250 (for example, the object 320) can thus generate the input beam 316. Further, the input beam 316 is received by the receiving unit 306, which can further be configured to generate a respective electrical signal for transmission to the controller 310. Accordingly, the controller 310, based on the received respective electrical signal, can be configured to generate a plurality of data points indicative of the object 320.

For example, in some non-limiting embodiments of the present technology, the controller 310 could be configured to generate the first plurality of data points 702 based on the input beam 316 received from the previous ROI 725 of the field of view 402.

The method hence proceeds to step 806.

## STEP 806: SELECTING, BY THE CONTROLLER, A REGION OF INTEREST OF THE FIELD OF VIEW BASED AT LEAST IN PART ON THE REFLECTED SIGNAL

At step 806, according to certain non-limiting embodiments of the present technology, the controller 310 can be configured to determine, within the field of view 402, a next ROI for further investigation.

For example, the controller 310 may be configured to select the ROI 325 following the previous ROI 725 based on the predetermined pattern 404 of the output beam 314 within the field of view 402. More specifically, the controller 310 may be configured to select the ROI 325 based on the path of the output beam 314 defined by the predetermined pattern 404, as described above with reference to Figure 4.

In another example, as described above with reference to Figure 7, in some non-limiting embodiments of the present technology, the controller 310 may be configured to select the ROI 325 based on the first plurality of data points 702 generated as a result of scanning the output beam 314 over the previous ROI 725. More specifically, according to certain non-limiting embodiments of the present technology, based on the first plurality of data points 702, the controller 310 can be configured to determine the type of the object 320; and based on the type of the object 320, select the ROI 325 for more elaborate inspection.

As mentioned earlier, the object 320 can be of the first type and the second type. According to certain non-limiting embodiments of the present technology, objects of the first type may include dynamic objects; whereas objects of the second type include static objects. In other non-limiting embodiments of the present technology, the objects of the first type may include objects of greater interest, and objects of the second type may include objects of general interest, as described above with reference to Figure 7.

The method thus proceeds to step 808.

## STEP 808: CAUSING, BY THE CONTROLLER, A SECOND OPTICAL ELEMENT TO SELECTIVELY PIVOT ABOUT A SECOND AXIS PARALLEL TO THE FIRST AXIS, THEREBY MODIFYING A FREQUENCY OF SCANNING IN THE REGION OF INTEREST

At step 808, according to certain non-limiting embodiments of the present technology, based on the type of the object 320 determined based on the first plurality of data points 702, the controller 310 can be configured to modify the given frequency of scanning of the output beam 314 over the ROI 325. According to certain non-limiting embodiments of the present technology, the controller 310 can be configured to modify the given frequency of scanning of the output beam 314 by causing additional pivoting of the second optical element 504 about the second rotation axis 510, which can be parallel to the first rotation axis 508.

Thus, in some non-limiting embodiments of the present technology, in response to identifying, based on the first plurality of data points 702, the object 320 as being of the first type, the controller 310 could be configured to cause the additional pivoting of the second optical element 504 about the second rotation axis 510, thereby increasing the given frequency of scanning of the ROI 325. By so doing, the controller 310 can be configured to generate a second plurality of data points 704 of higher density of data points than that of the first plurality of data points 702, as depicted in Figure 7.

Further, in other non-limiting embodiments of the present technology (not depicted in Figure 7), in response to identifying, based on the first plurality of data points 702, the object 320 as being of the second type, the controller 310 could be configured to continue scanning the output beam 314 over the ROI 325 with the same level of the given frequency of scanning as over the previous ROI 725.

Finally, in yet other non-limiting embodiments of the present technology (not depicted in Figure 7), in case where the controller 310 has scanned the output beam 314 over the previous ROI 725 at an increased level of the given frequency of scanning, in response to identifying, based on the first plurality of data points 702, the object 320 as being of the second type, the controller 310 could be configured to stop causing the second optical element 504 to pivot about the second rotation axis 510, thereby decreasing the frequency of scanning of the output beam 314 over the ROI 325.

Thus, certain embodiments of the method 800 allow selectively scanning ROIs, generating data points of different density, based on types of objects located therein. More specifically, these embodiments of the method 800 are directed to generating a more dense plurality of data points within ROIs including objects of greater interest, such as pedestrian crosswalks, road signs, parked cars, and the like. By doing so, the method 800 is directed to generating, by the LiDAR system 300, the 3D point map of the surroundings 250 using computational resources of the LiDAR system 300 more efficiently and, at the same time, allows for better safety of operation of the vehicle 220.

The method 800 hence terminates.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

While the above-described implementations have been described and shown with reference to particular steps performed in a particular order, it will be understood that these steps may be combined, sub-divided, or re-ordered without departing from the teachings of the present technology. Accordingly, the order and grouping of the steps is not a limitation of the present technology.

**Claims**

1. An optical system (300) comprising:

   a light source (302);
   a scanner unit (308) configured to direct light from the light source (302) outwardly from the optical system (300);
   a receiving unit (306) configured to sense light reflected from surrounding objects into the optical system (300), the receiving unit (306) including at least one sensor; and
   a controller (310) communicatively coupled with the at least one sensor, the scanner unit (308) and the receiving unit (306),
   the scanner unit (308) comprising:

   a first optical element (502) configured to rotate about a first axis, thereby defining in part a field of view of the optical system (300), and
   a second optical element (504) communicatively coupled with the controller (310), the light source (302), the first optical element (502), the second optical element (504) being arranged to receive light from the first optical element (502),
   the second optical element (504) configured to selectively pivot about a second axis parallel to the first axis, the controller (310) controlling movement of the second optical element (504) responsive to information received from the at least one sensor.

2. The optical system (300) of claim 1, wherein the second optical element (504) further is configured to rotate about a third axis perpendicular to the second axis.

3. The optical system (300) of claim 2, wherein the second optical element (504) is configured to rotate about the second axis and the third axis simultaneously.

4. The optical system (300) of claim 2 or claim 3, wherein the second optical element (504) is a mirror or a Risley prism.

5. The optical system (300) of any of claims 1-4, wherein the first optical element (502) is configured to rotate about the first axis at a constant speed.

6. The optical system (300) of claim 5, wherein the first optical element (502) is a prism, and the prism includes a plurality of faces and a spinning core element, the spinning core element being elongated along the first axis, and each one of the plurality of faces being a reflective surface arranged around the spinning core element.

7. The optical system (300) of claim 6, wherein each one of the plurality of faces is arranged at a respective predetermined angle relative to the first axis, or is parallel to the first axis.

8. The optical system (300) of any of claims 1-7, wherein the controller (310) is configured to control the movement of the second optical element (504), based on the information received from the at least one sensor, to modify a frequency of scanning over at least one of a plurality of predetermined regions of interest within the field of view of the optical system.

9. The optical system (300) of claim 8, wherein the controller (310) is further configured to control the movements of the second optical element (504) via at least one galvanometer (506) communicatively coupled therewith.

10. The optical system (300) of any of claims 1-9, wherein the light source (302), the second optical element (504), and the first optical element (502) are positioned sequentially along an optical axis.

**11.** A method (800) for controlling an optical system (300), the method being executable by a controller (310) of the optical system (300), the method comprising:

causing, by the controller (310), a light source (302) to emit light, the light being scanned over a first direction by a first optical element (502) of the optical system (300), the first optical element (502) rotating about a first axis perpendicular to the first direction defining in part a field of view of the optical system (300);

sensing, by at least one sensor communicatively coupled with the controller (310), a reflected signal of light reflected off surrounding objects in the field of view of the optical system (300);

selecting, by the controller (310), a region of interest of the field of view based at least in part on the reflected signal; and

causing, by the controller (310), a second optical element (504) to selectively pivot about a second axis parallel to the first axis, thereby modifying a frequency of scanning in the region of interest.

**12.** The method (800) of claim 11, wherein in response to detecting, by the controller (310) based on the reflected signal, at least one first class object in the region of interest, the modifying further comprises increasing the frequency of scanning in the region of interest.

**13.** The method (800) of claim 11, wherein in response to detecting, by the controller (310) based on the reflected signal, at least one second class object in the region of interest without detecting any first class object, the modifying further comprises decreasing the frequency of scanning in the region of interest, optionally wherein a first class object is a dynamic object, and a second class object is a static object.

**14.** The method (800) of claim 11, wherein the controller (310) is further configured to determine the region of interest based on a predetermined instruction for selecting regions of interest to be scanned.

**15.** The method (800) of claim 11, wherein the method further comprises, causing by the controller (310), the second optical element (504) to pivot about a third axis perpendicular to the second axis, and optionally the second optical element (504) to pivot about the second axis and the third axis simultaneously.

100

110

120

130

Figure 1

**Figure 2**

Figure 3

Figure 4

EP 3 982 156 A1

Figure 5

EP 3 982 156 A1

EP 3 982 156 A1

Figure 6

**Figure 7**

Europäisches
Patentamt
European
Patent Office
Office européen
des brevets

## EUROPEAN SEARCH REPORT

Application Number

EP 21 19 9980

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/033454 A1 (HONG XIAOPING [CN] ET AL) 30 January 2020 (2020-01-30) * paragraphs [0046], [0145], [0136]; figures 2, 17 * | 1,5, 10-14 | INV. G01S7/481 G01S17/931 G02B26/10 G02B26/12 |
| X | WO 2019/133101 A2 (MIRADA TECH INC [US]) 4 July 2019 (2019-07-04) * paragraphs [0114], [0115], [0140]; figure 8 * | 1-15 | ADD. G01S7/48 |
| A | US 2019/383911 A1 (ZHANG RUI [US] ET AL) 19 December 2019 (2019-12-19) * paragraph [0058]; figure 7 * | 1-15 | |

TECHNICAL FIELDS
SEARCHED      (IPC)

G01S
G02B

The present search report has been drawn up for all claims

| Place of search | Date of completion of the search | Examiner |
|---|---|---|
| Munich | 15 February 2022 | Ferrara, Michele |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 9980

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2022

| Patent document cited in search report | | Publication date | Patent family member(s) | | Publication date |
|---|---|---|---|---|---|
| US 2020033454 | A1 | 30-01-2020 | CN | 110325877 A | 11-10-2019 |
| | | | US | 2020033454 A1 | 30-01-2020 |
| | | | WO | 2018176275 A1 | 04-10-2018 |
| WO 2019133101 | A2 | 04-07-2019 | NONE | | |
| US 2019383911 | A1 | 19-12-2019 | CN | 112585492 A | 30-03-2021 |
| | | | US | 2019383911 A1 | 19-12-2019 |
| | | | WO | 2019241396 A1 | 19-12-2019 |

EPO FORM P0459

For more details about this annex : see Official Journal of the European Patent Office, No. 12/82

**EP 3 982 156 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018284276 A1
- US 2020025881 A1
- CN 109471126 A

- RU 2020117983
- RU 162020